# EUROPÄISCHE PATENTSCHRIFT

(11) **EP 2 611 653 B1**
(45) Veröffentlichungstag und Bekanntmachung des Hinweises auf die Patenterteilung: **15.06.2016**
(21) Anmeldenummer: 11725617.2
(22) Anmeldetag: 25.05.2011
(51) Int. Cl.: B60N 2/58, B60N 2/70, B68G 7/02, B68G 7/04

(54) **FAHRZEUGSITZBEZUG**
VEHICLE SEAT COVER
HOUSSE DE SIÈGE DE VÉHICULE

(30) Priorität: 30.08.2010 DE 102010035845
(43) Veröffentlichungstag der Anmeldung: 10.07.2013
(73) Patentinhaber: Johnson Controls GmbH, 51399 Burscheid (DE)
(72) Erfinder: POSNIEN, Axel, 51399 Burscheid (DE)
(74) Vertreter: Wolff, Felix
(86) Internationale Anmeldenummer: PCT/EP2011/002595
(87) Internationale Veröffentlichungsnummer: WO 2012/028218

(56) Entgegenhaltungen:
- DE-A1- 2 023 803
- DE-C1- 4 234 547
- FR-A- 1 056 438
- US-A- 2 274 929

## Beschreibung

Die vorliegende Erfindung betrifft einen Fahrzeugsitzbezug mit einer Unterlage, einem Bezug und einer Polsterung, die zwischen dem Bezug und der Unterlage vorgesehen ist, wobei die Unterlage, der Bezug und/oder die Polsterung durch mindestens eine Längs- und mindestens eine Quernaht miteinander verbunden sind. Des Weiteren betrifft die vorliegende Erfindung ein Verfahren zur Herstellung eines Sitzbezuges sowie einen Fahrzeugsitz, aufweisend den erfindungsgemäßen Sitzbezug.

Die gattungsgemäßen Fahrzeugsitzbezüge sind aus dem Stand der Technik bekannt. Diese haben jedoch den Nachteil, dass sie keine ausreichende Strukturierung aufweisen, dem Sitzinsassen keinen hinreichenden Halt geben und/oder zu aufwändig herzustellen sind. DE 20 23 803 A1 offenbart einen Sitz für Kraftfahrzeuge, bestehend aus einem Sitzrahmen, in Längsrichtung verlaufenden dehnbaren Federstützen aus wellenförmig gebogenem Draht, einer Polsterauflage und einem Polsterbezug, wobei die Polsterauflage nur im vorderen Bereich des Sitzes durch die Federstützen getragen ist, während im hinteren Bereich des Sitzes ausschließlich die Polsterauflage den Federweg des Sitzes bestimmt. DE 42 34 547 C1 lehrt einen Sitzbezug für Fahrzeugsitze, der in einem durch Reibungskräfte beaufschlagten Sitzflächenbereich über elektrisch leitende Verbindungsmittel zur Fahrzeugmasse geerdet ist, wobei im Sitzflächenbereich mehrere flexible Leiterstränge angeordnet sind, die in Abständen voneinander nebeneinander her verlaufen, und wobei in den Sitzflächenbereich mehrere beabstandet voneinander verlaufende Nahtvertiefungen eingelassen sind. FR 1 056 438 A offenbart eine Beschichtung für einen Fahrzeugsitz, die zwei Kunststoffplatten umfasst, wobei eine Verstärkung der Unterseite eine Verformung verhindert. US 2 274 929 A lehrt ein Polstermaterial und ein Verfahren zur Herstellung eines dekorierten Polstermaterials.

Es war deshalb die Aufgabe der vorliegenden Erfindung, einen Fahrzeugsitzbezug zur Verfügung zu stellen, der die Nachteile des Standes der Technik nicht aufweist.

Gelöst wird die Aufgabe mit einem Fahrzeugsitzbezug mit einer Unterlage, einem Bezug und einer Polsterung, die zwischen dem Bezug und der Unterlage vorgesehen ist, wobei die Unterlage, der Bezug, und/oder die Polsterung durch mindestens eine Längsnaht die sich parallel zur Wirbelsäule oder den Oberschenkeln des Sitzinsassen erstreckt, und mindestens eine Quernaht, die sich senkrecht zur Längsnaht erstreckt, miteinander verbunden sind, wobei die Längsnaht Ein- und/oder Ausbuchtungen aufweist, wobei die Quernaht in ihrem Verlauf verspringt.

Die zu diesem Gegenstand der vorliegenden Erfindung gemachten Ausführungen gelten für die anderen Erfindungsgegenstände gleichermaßen und umgekehrt.

Die vorliegende Erfindung betrifft einen Fahrzeugsitzbezug, der auf einem Fahrzeugsitz angeordnet ist und der einseitig im direkten Kontakt mit dem Sitzinsassen steht. Der erfindungsgemäße Fahrzeugsitzbezug kann sowohl im Bereich der Rückenlehne als auch im Sitzteilbereich des Fahrzeugsitzes vorgesehen sein. Der Fahrzeugsitz kann einer oder mehreren Personen Platz bieten. Bei dem Fahrzeugsitz kann es sich demnach auch um eine Sitzbank handeln. Erfindungsgemäß weist der Fahrzeugsitzbezug eine Unterlage, beispielsweise ein Vlies und einen Bezug, dessen eine Oberfläche die Sichtseite des Fahrzeugsitzes bildet, auf. Zwischen der Unterlage und dem Bezug ist eine Polsterung, beispielsweise eine Schaumstoffpolsterung, vorgesehen. Die Unterlage, der Bezug und/oder die Polsterung sind durch mindestens eine Längsnaht und mindestens eine Quernaht miteinander verbunden. Die Längsnaht erstreckt sich im Bereich der Rückenlehne im Wesentlichen parallel zu der Wirbelsäule des Sitzinsassen und im Sitzteilbereich parallel zu den Oberschenkeln des Sitzinsassen. Die Quernähte sind jeweils senkrecht dazu vorgesehen.

Erfindungsgemäß weist die Längsnaht nun Ein- und/oder Ausbuchtungen auf, ganz besonders bevorzugt ist ihr Verlauf zickzackförmig vorgesehen. Durch die Ein- und/oder Ausbuchtung wird die Strukturierung des Sitzbezuges erleichtert/verbessert und gleichzeitig die Polsterung zwischen dem Bezug und der Unterlage zumindest vorfixiert.

Die Quernaht ist über die Breite des Fahrzeugsitzbezuges versetzt vorgesehen. Diese erfindungsgemäße oder bevorzugte Ausführungsform der vorliegenden Erfindung hat den Vorteil, dass der erfindungsgemäße Sitzbezug besonders einfach herzustellen ist.

Die zu diesem Gegenstand der vorliegenden Erfindung gemachten Ausführungen gelten für die anderen Erfindungsgegenstände gleichermaßen und umgekehrt.

Gemäß einem weiteren oder bevorzugten Gegenstand der vorliegenden Erfindung besteht die Polsterung aus einer Vielzahl von Polsterstreifen. Diese Polsterstreifen sind vorzugsweise parallel angeordnet. Sie weisen bevorzugt dieselbe Länge auf und können unterschiedlich breit sein.

Die zu diesem Gegenstand der vorliegenden Erfindung gemachten Ausführungen gelten für die anderen Erfindungsgegenstände gleichermaßen und umgekehrt.

Vorzugsweise handelt es sich bei der Unterlage um ein nichtgewebtes Material. Vorzugsweise handelt es sich bei dem Bezug um Leder.

Ein weiterer Gegenstand der vorliegenden Erfindung ist ein Verfahren zur Herstellung eines Fahrzeugsitzbezuges mit einer Unterlage und einem Bezug, wobei der Bezug wellenförmig an der Unterlage mit einer Längsnaht (5) und einer Quernaht (6) befestigt und dann eine Polsterung zwischen der Unterlage und dem Bezug vorgesehen wird, wobei die Quernaht in ihrem Verlauf verspringend vorgesehen wird.

Die zu dem Fahrzeugsitzbezug gemachten Ausführungen gelten für das erfindungsgemäße Verfahren gleichermaßen und umgekehrt.

Bei dem erfindungsgemäßen Verfahren wird der Bezug wellenförmig an der Unterlage befestigt, insbesondere angenäht, und dann die sich dadurch ergebenden Taschen mit einer Polsterung, insbesondere mit Polsterstreifen, befüllt.

Vorzugsweise handelt es sich bei der Naht um eine Längsnaht. Ganz besonders bevorzugt weist die Längsnaht eine Ein- und/Ausbuchtung auf, d. h. sie ist nicht gerade, sondern hat vorzugsweise einen zickzackförmigen Verlauf.

Weiterhin bevorzugt wird die Polsterung streifenförmig vorgesehen und in jede gebildete Tasche jeweils ein Streifen eingelegt. Dadurch ergibt sich ein besonders gut strukturierter Fahrzeugsitzbezug.

Vorzugsweise wird anschließend mindestens eine Quernaht vorgesehen, die in ihrem Verlauf verspringt. Besonders bevorzugt ist diese Quernaht treppenförmig angeordnet.

Im Folgenden werden die Erfindungen anhand der Figuren 1 - 10 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt den erfindungsgemäßen Fahrzeugsitz.
- **Figur 2**: zeigt den Bezug mit dem aufgezeichneten Nahtverlauf.
- **Figur 3**: zeigt den an der Unterlage wellenförmig befestigten Bezug.
- **Figuren 4 und 5**: zeigen die Taschen des erfindungsgemäßen Sitzbezuges.
- **Figuren 6 und 7**: zeigen das Befüllen der Taschen mit jeweils einem Polsterstreifen.
- **Figur 8**: zeigt die Anordnung der Quernähte.
- **Figuren 9 und 10**: zeigen den fertiggestellten Fahrzeugsitzbezug.

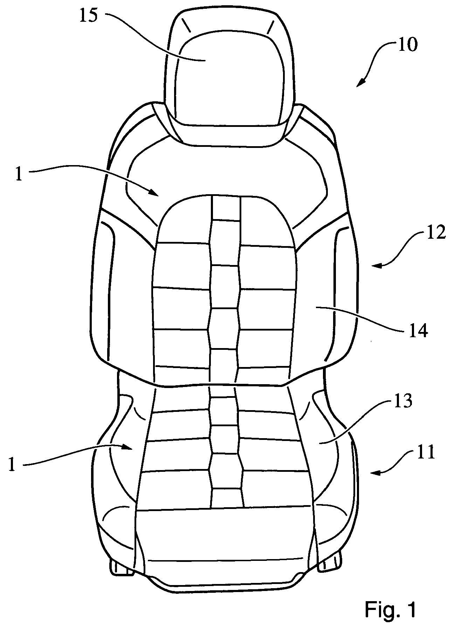

**Figur 1** zeigt den erfindungsgemäßen Fahrzeugsitz 10. Dieser weist ein Sitzteil 11 und eine Rückenlehne 12 auf, die vorzugsweise drehbar an dem Sitzteil 11 vorgesehen ist. Im oberen Bereich der Rückenlehne ist eine Kopfstütze vorgesehen. Sowohl die Rückenlehne 12 als auch das Sitzteil 11 weisen den erfindungsgemäßen Fahrzeugsitzbezug 1 auf. Dieser Sitzbezug ist sowohl im Bereich des Sitzteils als auch im Bereich der Rückenlehne von Seitenpolsterungen 13, 14 umgeben. Der erfindungsgemäße Fahrzeugsitzbezug 1 weist eine strukturierte Oberfläche auf, die im Wesentlichen aus rechteckförmigen Elementen besteht, die zueinander versetzt sind. Dafür weist der erfindungsgemäße Sitzbezug hier sowohl im Bereich der Rückenlehne als auch im Sitzteilbereich 4 Längsnähte 5 auf, die sich parallel zur Wirbelsäule bzw. parallel zu den Oberschenkeln erstrecken und eine Vielzahl von Quernähten 6, die vorzugsweise senkrecht zu den Längsnähten 5 angeordnet sind. Der erfindungsgemäße Fahrzeugsitzbezug besteht aus einem, hier sichtbaren, Bezug 3 und einer Unterlage 2, insbesondere einem Vlies, das sich unterhalb des Bezuges 3 in Richtung der Struktur des Fahrzeugsitzes befindet. Zwischen dem Bezug 3 und der Unterlage 2 ist eine Polsterung 4 vorgesehen, die vorzugsweise aus einer Vielzahl von Polsterstreifen, die vorzugsweise parallel zu den Längsnähten angeordnet sind, besteht.

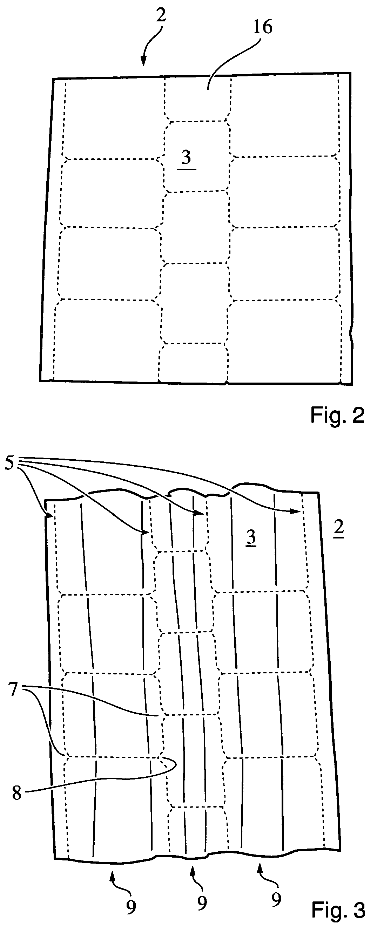

**Figur 2** zeigt die Unterlage 2, hier das Vlies, auf dem der Bezug 3, hier aus Leder, angeordnet ist. Auf dem Leder ist der anzufertigende Nahtverlauf 16 aufgezeichnet.

In **Figur 3** ist der Bezug 3 wellenförmig auf der Unterlage 2 fixiert. Durch die Längsnähte 5, hier vier Längsnähte, ergeben sich drei Taschen 9, die nachfolgend mit der Polsterung, insbesondere den Polsterstreifen 4, befüllt werden. Sowohl in Figur 2 als auch in Figur 3 ist deutlich zu erkennen, dass die Längsnähte 5 nicht gerade verlaufen, sondern Ein- bzw. Ausbuchtungen aufweisen. In den Ein- und Ausbuchtungen wird jeweils eine der nebeneinander liegenden Taschen 9 in ihrem Querschnitt etwas reduziert.

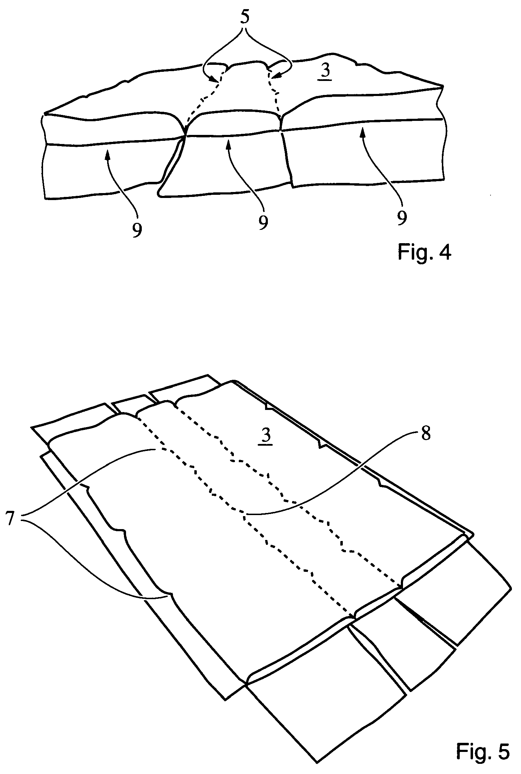

**Figuren 4 und 5** zeigen die Taschen 9, nachdem der Bezug 3 an der Unterlage 2 entlang der wellenförmigen Längsnähte 5 fixiert worden ist. Deutlich zu erkennen sind die Ein- bzw. Ausbuchtungen 7, 8. Diese Ein- bzw. Ausbuchtungen dienen zu einer Vorfixierung der Polsterstreifen, die in die Taschen eingeführt werden. Darüber hinaus ergibt sich durch die Ein- bzw. Ausbuchtungen ein besonders stark konturierter Fahrzeugsitzbezug.

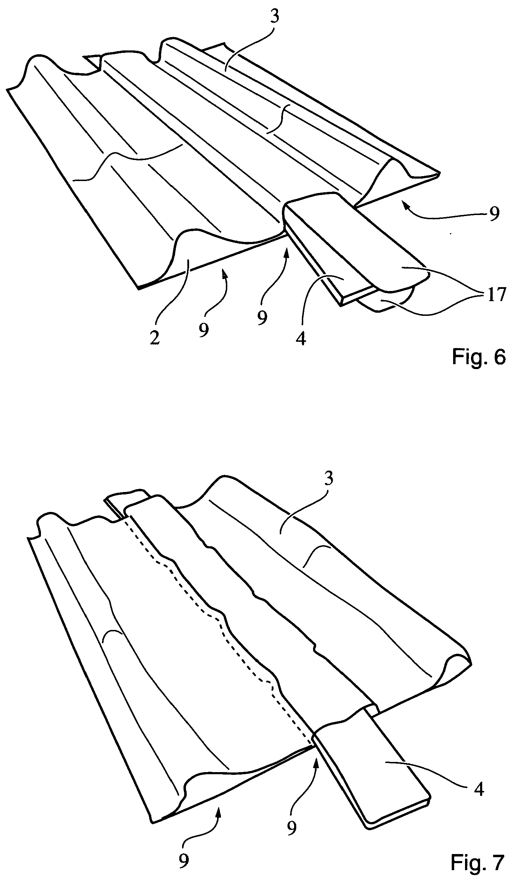

**Figuren 6 und 7** zeigen das Befüllen der Taschen 9 mit den Polsterstreifen 4. Diese werden in dem vorliegenden Fall zwischen zwei Einführhilfen 17, hier zwei Laschen, vorgesehen und zwischen diesen komprimiert und dann in die Taschen eingezogen. Sobald sie die gewünschte Stellung aufweisen, werden die Einführhilfen 17 aus den Taschen 9 entfernt.

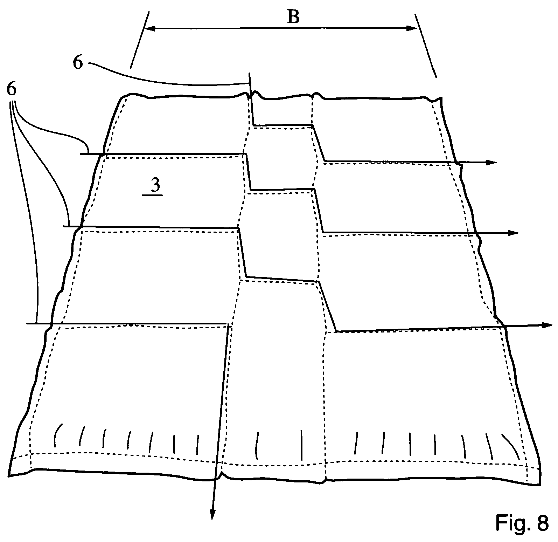

**Figur 8** zeigt die streifenförmige Polsterung 4 in der Tasche 9. Nachdem alle Polsterstreifen, hier drei Polsterstreifen, in den Taschen 9 vorgesehen worden sind, werden Quernähte 6 angeordnet. Der Verlauf der jeweiligen Quernaht 6 ist durch einen Pfeil auf dem Bezug 3 gekennzeichnet. Es ist deutlich zu erkennen, dass mehrere Nähte 6 sich über die gesamte Breite B des Sitzbezuges erstrecken und dass sie verspringen. Insbesondere ist mindestens eine der Quernähte treppenförmig vorgesehen.

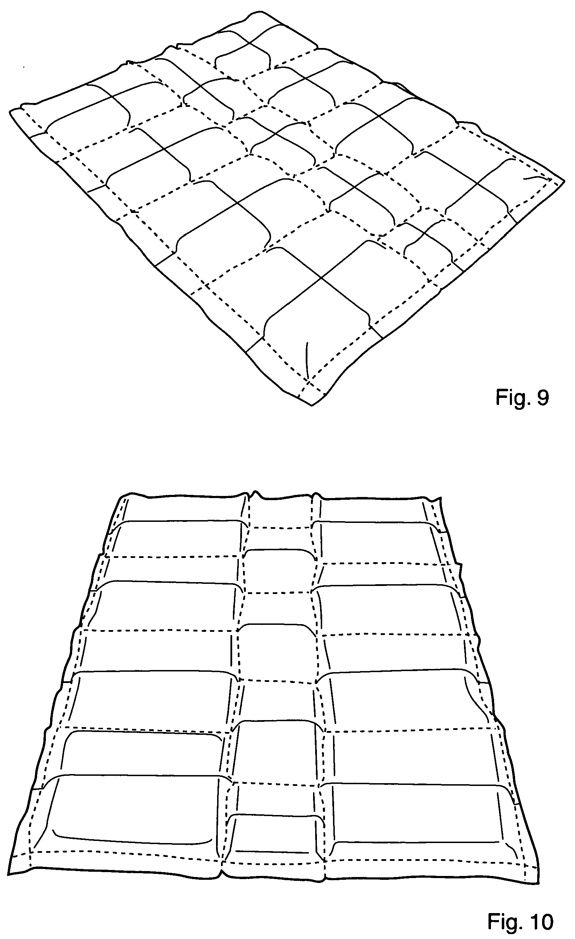

**Figuren 9 und 10** zeigen den fertiggestellten Fahrzeugsitzbezug von der Bezugseite (Figur 9) bzw. von der Unterseite (Figur 10). Dieser Sitzbezug wird sodann auf dem Fahrzeugsitz befestigt und mit den Seitenpolsterungen bzw. mit den anderen den erfindungsgemäßen Fahrzeugsitzbezug umgebenden Bezugsbereichen des erfindungsgemäßen Fahrzeugsitzes verbunden.

### Bezugszeichenliste:

- 1: Fahrzeugsitzbezug
- 2: Unterlage, Vlies
- 3: Bezug
- 4: Polsterung, Polsterstreifen
- 5: Längsnaht
- 6: Quernaht
- 7: Einbuchtung
- 8: Ausbuchtung
- 9: Tasche
- 10: Fahrzeugsitz
- 11: Sitzteil
- 12: Rückenlehne
- 13: Seitenpolsterung im Sitzbereich
- 14: Seitenpolsterung im Rückenlehnenbereich
- 15: Kopfstütze
- 16: Anzeichnung der Nähte
- 17: Einführhilfe
- B: Breite des Sitzbezugs

## Patentansprüche

1. Fahrzeugsitzbezug (1) mit einer Unterlage (2), einem Bezug (3) und einer Polsterung (4), die zwischen dem Bezug (3) und der Unterlage (2) vorgesehen ist, wobei die Unterlage (2), der Bezug (3) und/oder die Polsterung (4) durch mindestens eine Längsnaht (5), die sich parallel zur Wirbelsäule oder den Oberschenkeln des Sitzinsassen erstreckt, und mindestens eine Quernaht (6), die sich senkrecht zur Längsnaht erstreckt, miteinander verbunden sind, **dadurch gekennzeichnet, dass** die Längsnaht (5) Ein- und/oder Ausbuchtungen (7, 8) aufweist und die Quernaht in ihrem Verlauf verspringt.

2. Fahrzeugsitzbezug (1) nach Anspruch 1, **dadurch gekennzeichnet, dass** die Polsterung aus einer Vielzahl von Polsterstreifen besteht.

3. Fahrzeugsitzbezug (1) nach einem der voranstehenden Ansprüche, **dadurch gekennzeichnet, dass** der Bezug Leder und/oder Stoff ist.

4. Verfahren zur Herstellung eines Fahrzeugsitzbezuges (1) mit einer Unterlage (2) und einem Bezug (3), wobei der Bezug (3) wellenförmig an der Unterlage mit einer Längsnaht (5) und einer Quernaht (6) befestigt und dann eine Polsterung (4) zwischen der Unterlage (2) und dem Bezug (3) vorgesehen wird, **dadurch gekennzeichnet, dass** die Quernaht in ihrem Verlauf verspringend vorgesehen wird.

5. Verfahren nach Anspruch 4, **dadurch gekennzeichnet, dass** die Längsnaht (5) Ein- und/oder Ausbuchtungen (7, 8) aufweist.

6. Verfahren nach einem der voranstehenden Ansprüche, **dadurch gekennzeichnet, dass** die Polsterung streifenförmig vorgesehen wird.

7. Verfahren nach Anspruch 4, **dadurch gekennzeichnet, dass** die Quernaht (6) treppenförmig angeordnet wird.

8. Fahrzeugsitz aufweisend den Fahrzeugsitzbezug nach einem der Ansprüche 1 - 3 oder hergestellt nach einem der Ansprüche 4 - 7.

## Claims

1. Vehicle seat cover (1) comprising an underlay (2), a cover (3) and an upholstered element (4) which is provided between the cover (3) and the underlay (2), wherein the underlay (2), the cover (3) and/or the upholstered element (4) are connected together by at least one longitudinal seam (5), which extends parallel to the spinal column or the thighs of the seat occupant, and at least one transverse seam (6), which extends perpendicularly to the longitudinal seam, **characterized in that** the longitudinal seam (5) has inwardly curved portions and/or outwardly curved portions (7, 8) and the transverse seam does not follow a straight path.

2. Vehicle seat cover (1) according to Claim 1, **characterized in that** the upholstered element consists of a plurality of upholstered strips.

3. Vehicle seat cover (1) according to one of the preceding claims, **characterized in that** the cover is leather and/or fabric.

4. Method for producing a vehicle seat cover (1) comprising an underlay (2) and a cover (3), wherein the cover (3) is fastened to the underlay by a longitudinal seam (5) and a transverse seam (6) in order to produce undulations and then an upholstered element (4) is provided between the underlay (2) and the cover (3), **characterized in that** the transverse seam is provided such that it does not follow a straight path.

5. Method according to Claim 4, **characterized in that** the longitudinal seam (5) has inwardly curved portions and/or outwardly curved portions (7, 8).

6. Method according to one of the preceding claims, **characterized in that** the upholstered element is provided to be strip-shaped.

7. Method according to Claim 4, **characterized in that** the transverse seam (6) is arranged in a step-shaped manner.

8. Vehicle seat, comprising the vehicle seat cover according to one of Claims 1 - 3, or produced according to one of Claims 4 - 7.

## Revendications

1. Housse de siège de véhicule (1) comprenant un support (2), un revêtement (3) et un rembourrage (4) qui est prévu entre le revêtement (3) et le support (2), le support (2), le revêtement (3) et/ou le rembourrage (4) étant assemblés les uns aux autres par au moins un joint longitudinal (5) qui s'étend parallèlement à la colonne vertébrale ou aux cuisses d'un occupant du siège, et par au moins un joint transversal (6) qui s'étend perpendiculairement au joint longitudinal, **caractérisée en ce que** le joint longitudinal (5) présente des parties rentrées et/ou des parties sorties (7, 8) et le joint transversal présente une allure décalée.

2. Housse de siège de véhicule (1) selon la revendication 1, **caractérisée en ce que** le rembourrage se compose d'une pluralité de bandes de rembourrage.

3. Housse de siège de véhicule (1) selon l'une quelconque des revendications précédentes, **caractérisé en ce que** le revêtement se compose de cuir et/ou d'étoffe.

4. Procédé de fabrication d'une housse de siège de véhicule (1) comprenant un support (2) et un revêtement (3), le revêtement (3) étant fixé sous forme ondulée sur le support avec un joint longitudinal (5) et un joint transversal (6) puis un rembourrage (4) étant prévu entre le support (2) et le revêtement (3), **caractérisé en ce que** le joint transversal présente une allure décalée.

5. Procédé selon la revendication 4, **caractérisé en ce que** le joint longitudinal (5) présente des parties rentrées et/ou des parties sorties (7, 8).

6. Procédé selon l'une quelconque des revendications précédentes, **caractérisé en ce que** le rembourrage est prévu en forme de bande.

7. Procédé selon la revendication 4, **caractérisé en ce que** le joint transversal (6) est disposé en forme d'escalier.

8. Siège de véhicule présentant la housse de siège de véhicule selon l'une quelconque des revendications 1 à 3 ou fabriquée selon l'une quelconque des revendications 4 à 7.
